# EUROPÄISCHE PATENTANMELDUNG

(11) **EP 4 163 060 A1**
(43) Veröffentlichungstag der Anmeldung: **12.04.2023**
(21) Anmeldenummer: 21200991.4
(22) Anmeldetag: 05.10.2021
(51) Int. Cl.: B25F 5/02

(54) **ZUSATZHANDGRIFF FÜR EINE HANDWERKZEUGMASCHINE**

(71) Anmelder: Hilti Aktiengesellschaft, 9494 Schaan (LI)
(72) Erfinder: Marder, Johannes Alfred, 6800 Feldkirch (AT); Bartholomee, Ward, 52072 Aachen (DE)
(74) Vertreter: Hilti Aktiengesellschaft Corporate Intellectual Property

(57) **Zusammenfassung**

Zusatzhandgriff für eine Handwerkzeugmaschine, wobei der Zusatzhandgriff einen vorzugsweise durch Schaumspritzgiessen erhaltenen Schaumkern aufweist. Der Schaumkern ist vorzugsweise durch eine Stützschale umschlossen. Die Stützschale ist vorzugsweise durch eine Weichkomponentenschicht umschlossen.

## Beschreibung

Die vorliegende Erfindung betrifft einen Zusatzhandgriff für eine Handwerkzeugmaschine sowie ein Verfahren zum Herstellen eines Zusatzhandgriffs für eine Handwerkzeugmaschine. Zusatzhandgriffe für Handwerkzeugmaschinen sind grundsätzlich aus dem Stand der Technik bekannt. Unter einem Zusatzhandgriff ist insbesondere ein Handgriff zu verstehen, der wiederlösbar an einer Handwerkzeugmaschine befestigt werden kann und der insbesondere kein einstückig mit einem Handwerkzeugmaschinengehäuse ausgebildeter Handgriff ist.

EP 3 233 384 B1 offenbart einen Zusatzhandgriff für eine Handwerkzeugmaschine mit einem rahmenförmigen Griff, der eine Griffstange zum Greifen durch einen Anwender, eine Querstange und zwei die Griffstange mit der Querstange verbindende Flanken aufweist. Der rahmenförmige Griff hat einen monolithischen, zusammenhängenden Grundkörper, der die Griffstange, die Querstange und zwei Festkörpergelenke bildet. Der Grundkörper ist vorzugsweise aus einem steifen Kunststoff gespritzt. Der Kunststoff ist beispielsweise Polyamid.

DE 21 2016 000 222 U1 beschreibt eine Fotoausrüstungsträgerstange, die einen inneren Kern und einen Mantel aufweist, wobei der Mantel den inneren Kern oder einen Teil des inneren Kerns umschließend einbettet. Der Mantel ist an dem inneren Kern durch Schaumspritzguss oder Umspritzen ausgebildet.

Es ist Aufgabe der vorliegenden Erfindung einen Zusatzhandgriff mit einem einfachen und kostengünstigen Aufbau bereitzustellen.

Die Aufgabe wird dadurch gelöst, dass der Zusatzhandgriff einen Schaumkern aufweist. Es hat sich als vorteilhaft herausgestellt, wenn der Schaumkern durch Schaumspritzgiessen erhalten wird.

Die Erfindung schließt die Erkenntnis ein, dass bei Zusatzhandgriffen des Standes der Technik, die mit einem typischerweise dünnwandigen Grundkörper aus Kunststoffspritzguss ausgestattet sind, eben dieser Grundkörper eine ungünstige Massenanhäufung eines Weichkomponente, mittels welcher der Grundkörper wiederum zu umspritzen ist, führen kann. Diese kann zu hohen Zykluszeiten und zu einem sehr hohen Anteil an Weichkomponente führen, was nachteilig hohe Herstellungskosten bedingt.

Der erfindungsgemäße Schaumkern schafft die Grundlage für eine freie Gestaltung der mechanisch relevanten Innenkontur einer auf den Schaumkern aufzubringende Stützschale, ohne dabei durch die Gestaltung einer sichtbaren Außenkontur der Stützschale eingeschränkt zu werden. Durch das Schäumen des Schaumkerns - der im Prinzip einen "verlorenen Kern" dargestellt - kann ein Materialeinsatz optimiert werden. Durch die freie Wahl des Materials des Schaumkerns können zudem das Gewicht und die Kosten optimiert werden, oder es können zusätzliche Randbedingungen - wie z.B. der Einsatz recycelter Kunststoffe, die aus mechanischen oder optischen Gründen nicht als Schalenwerkstoff zum Einsatz kommen können - berücksichtigt werden. Durch die Verwendung des Schaumkerns kann eine nach außen geschlossene Kontur hergestellt werden, welche hinsichtlich ergonomischer, haptischer und mechanischer Eigenschaften in weiten Grenzen frei gestaltbar ist.

In einer besonders bevorzugten Ausgestaltung ist der Schaumkern zumindest abschnittsweise durch eine Stützschale umschlossen. Es hat sich als vorteilhaft herausgestellt, wenn der Schaumkern vollständig durch die Stützschale umschlossen ist.

In einer weiteren besonders bevorzugten Ausgestaltung ist die Stützschale zumindest abschnittsweise durch eine Weichkomponentenschicht umschlossen. Es hat sich als vorteilhaft herausgestellt, wenn eine überwiegender Oberflächenanteil der Stützschale durch die Weichkomponentenschicht umschlossen ist.

Es hat sich als vorteilhaft herausgestellt, wenn der Schaumkern als Einleger bereitgestellt ist und/oder die Stützschale durch Umspritzen des Einlegers erhalten wurde. In einer weiteren besonders bevorzugten Ausgestaltung können die Stützschale und die Weichkomponentenschicht durch einen 2K-Spritzguss erhalten werden. In diesem Fall ist der Schaumkern insbesondere als Einleger bereitgestellt.

In einer besonders bevorzugten Ausgestaltung weisen der Schaumkern und die Stützschale dasselbe Material auf oder bestehen aus demselben Material. Dies bietet den Vorteil einer möglichen Verbindung von Schaumkern und Stützschale. Es hat sich als vorteilhaft herausgestellt, wenn der Schaumkern und/oder die Stützschale aus einem Kunststoff bestehen oder Kunststoff aufweisen. Es hat sich weiterhin als vorteilhaft herausgestellt, wenn der Kunststoff ein glasfaserverstärkten Kunststoff, insbesondere ein glasfaserverstärktes Polyamid, beispielsweise PA6GF30, ist. Der Schaumkern kann aus einem Recycling-Kunststoff bestehen oder einen solchen aufweisen.

In einer weiteren besonders bevorzugten Ausgestaltung besteht die Weichkomponentenschicht aus einem thermoplastischen Elastomer oder weist ein solches auf. In einer weiteren besonders bevorzugten Ausgestaltung wird der Schaumkern durch physikalisches und/oder chemisches Aufschäumen erhalten.

Es hat sich als vorteilhaft herausgestellt, wenn der Schaumkern einen Schäumgrad größer 30 Prozent und/oder einen Schäumgrad kleiner 60 Prozent aufweist. Es hat sich ebenfalls als vorteilhaft herausgestellt, wenn die Stützschale aus einem ungeschäumten Kunststoff besteht. Die Stützschale kann einen Schäumgrad kleiner 10 Prozent, vorzugsweise kleiner 5 Prozent aufweisen. Es hat sich als vorteilhaft herausgestellt, wenn der Schaumkern wenigstens 50 Prozent, vorzugsweise wenigstens 75 Prozent eines Gesamtvolumens des Zusatzhandgriffs ausmacht.

Die Aufgabe wird ebenfalls gelöst durch eine Handwerkzeugmaschine, insbesondere eine elektrische Handwerkzeugmaschine mit einem Zusatzhandgriff der vorbeschrieben Art.

Die Aufgabe wird ebenfalls gelöst durch ein Verfahren zum Herstellen eines Zusatzhandgriffs für eine Handwerkzeugmaschine, bei dem ein Schaumkern und eine den Schaumkern zumindest abschnittsweise umgebene Stützschale bereitgestellt wird. Es hat sich als vorteilhaft herausgestellt, wenn der Schaumkern als Einleger bereitgestellt wird und das Bereitstellen der Stützschale nach dem Bereitstellens des Schaumkerns erfolgt. In einer besonders bevorzugten Ausgestaltung wird die Stützschale durch Umspritzen des Einlegers erhalten. Es hat sich als vorteilhaft herausgestellt, wenn die Stützschale im Rahmen des Verfahrens zumindest abschnittsweise mit einer Weichkomponentenschicht umschlossen wird, vorzugsweise mittels Umspritzen. Das Bereitstellen der Stützschale und der Weichkomponentenschicht kann mittels eines 2K-Spritzgussverfahrens erfolgen. Das Verfahren durch die mit Bezug auf die Vorrichtung verwendeten Merkmale in entsprechender Weise weitergebildet sein.

Weitere Vorteile ergeben sich aus der folgenden Figurenbeschreibung. In den Figuren sind besonders bevorzugte Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: ein bevorzugtes Ausführungsbeispiel eines Zusatzhandgriffs;
- Figur 2: eine Schnitt durch den Zusatzhandgriff der Figur 1; und
- Figur 3: ein Verfahren zum Herstellen eines Zusatzhandgriffs.

### Ausführungsbeispiel:

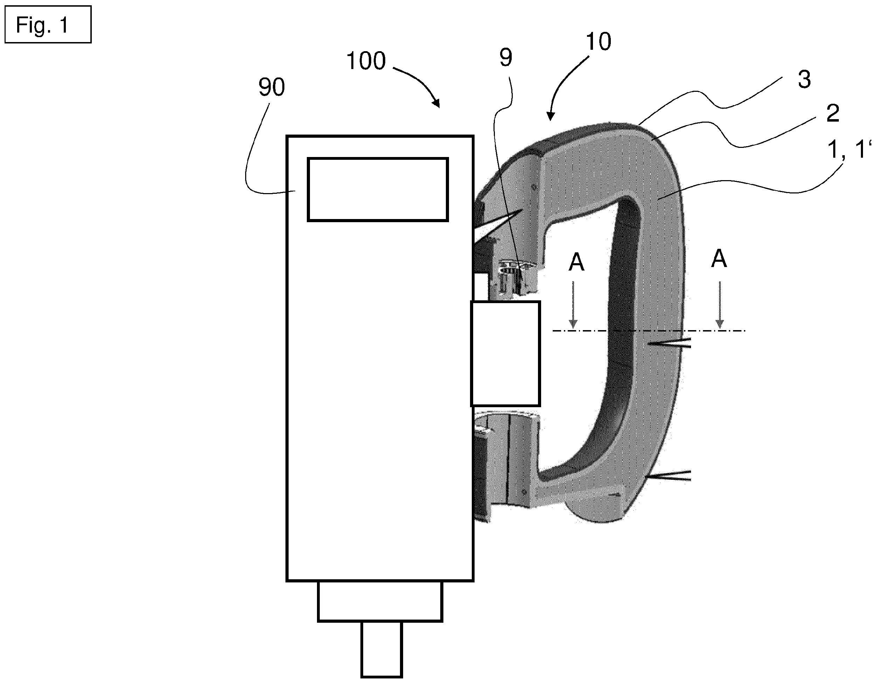

Figur 1 zeigt - in stark schematisierter Darstellung - eine elektrische Handwerkzeugmaschine 100 mit einem integrierten Gehäusehandgriff 90. Die elektrische Handwerkzeugmaschine 100 ist ebenfalls ausgestattet mit einem Zusatzhandgriff 10, der erfindungsgemäß einen Schaumkern 1 aufweist. Der Schaumkern 1 besteht beispielhaft aus einem glasfaserverstärkten Polyamid PA6GF30, wobei es sich um Recyclingmaterial handelt. Der Schaumkern 1 wurde durch physikalisches Aufschäumen erhalten und weist beispielhaft einen Schäumgrad von 40 Prozent auf.

Wie der Figur 1 entnommen werden kann, ist der Schaumkern 1 vollständig durch eine Stützschale 2 umschlossen. Der Schaumkern 1 ist als Einleger 1' bereitgestellt und die Stützschale 2 wurde durch Umspritzen des Einlegers 1' erhalten. Die Verwendung des als Einleger 1' bereitgestellten Schaumkerns 1 als "verlorener Kern" ermöglicht eine deutliche Gewichtsreduktion durch das Aufschäumen des Materials bezogen auf das identische Volumen mit kompaktem Material, sowie die die Verwendung von minderwertigem und kostengünstigen Recyclingmaterial. Durch die Verwendung des Einlegers 1' kann eine nach außen geschlossene Kontur hergestellt werden, welche hinsichtlich ergonomischer, haptischer und mechanischer Eigenschaften in weiten Grenzen frei gestaltbar ist.

Der Schaumkern 1 und die Stützschale 2 weisen dasselbe Material auf, also vorliegend das glasfaserverstärkte Polyamid PA6GF30. Dabei besteht die Stützschale 2 aus ungeschäumten Material.

Die Stützschale 2 ist - mit Ausnahme eines Gehäuseanschlussbereichs 9 des Zusatzhandgriffs 10 - vollständig durch eine Weichkomponentenschicht 3 umschlossen, die dem Nutzerkomfort dient. Die die Weichkomponentenschicht besteht beispielhaft aus einem thermoplastischen Elastomer. Die die Stützschale 2 und die Weichkomponentenschicht 3 wurden beispielhaft durch einen 2K-Spritzguss erhalten.

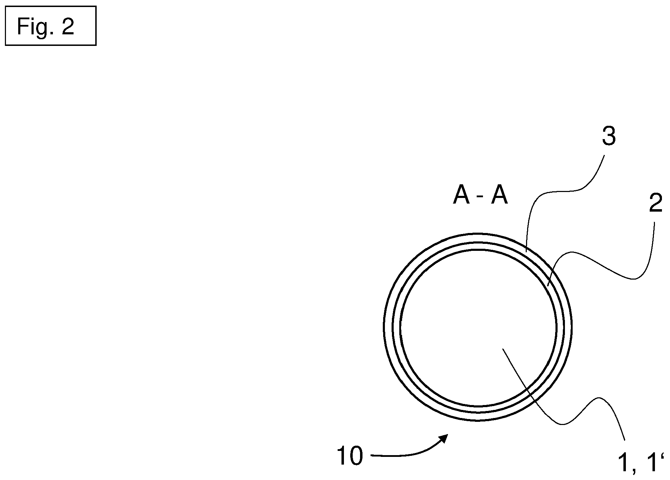

Figur 2 zeigt einen Schnitt durch den Zusatzhandgriff 10 entlang der Schnittlinie A-A in Figur 1. Wie der Figur 2 entnommen werden kann, belegt der homogen ausgebildete Schaumkern 1 einen überwiegenden Anteil - im vorliegenden Beispiel mehr als 80 Prozent - der Querschnittsfläche des Zusatzhandgriffs 10 aus. Insgesamt mach der Schaumkern 1 beispielshaft wenigstens 75 Prozent eines Gesamtvolumens des Zusatzhandgriffs 10 aus.

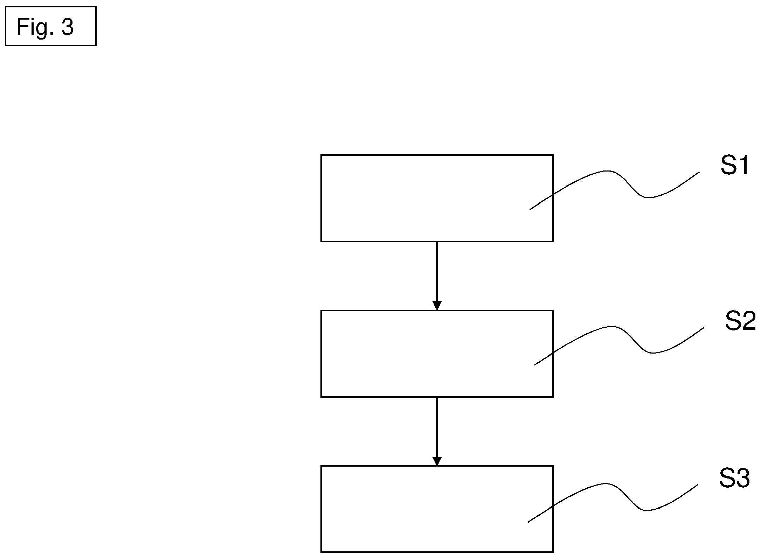

Ein Verfahren zum Herstellen eines Zusatzhandgriffs für eine Handwerkzeugmaschine, insbesondere des Zusatzhandgriffs 10 der Figur 1, ist in Figur 3 dargestellt. In einem ersten Schritt S1 wird ein Schaumkern als Einleger bereitgestellt. Dies erfolgt durch Schaumspritzgiessen eines glasfaserverstärkten Polyamids, beispielhaft mit einem Schäumgrad von 40 Prozent.

In einem sich anschließenden Schritt S2 wird eine Stützschale bereitgestellt, die den Schaumkern vollständig umgibt. Zur Positionierung des Einlegers können in die Geometrie Abstandshalter integriert sein, welche bei der Überspritzung mit dem Material der Stützschale die Wandstärke der strukturell tragenden Stützschale definieren.

In einem sich anschließenden Schritt S3 wird die Stützschale zumindest abschnittsweise mit einer Weichkomponentenschicht umschlossen. Der Schritt S2 des Bereitstellens des Stützschale und der Schritt S3 des Bereitstellens der Weichkomponentenschicht erfolgt beispielhaft mittels eines 2K-Spritzgussverfahrens.

### Bezugszeichenliste

- 1: Schaumkern
- 1': Einleger
- 2: Stützschale
- 3: Weichkomponentenschicht
- 9: Gehäuseanschlussbereich

- 10: Zusatzhandgriff
- 90: Gehäusehandgriff
- 100: Handwerkzeugmaschine

- S1...S3: Verfahrensschritte

## Patentansprüche

1. Zusatzhandgriff (10) für eine Handwerkzeugmaschine (100),
**dadurch gekennzeichnet, dass** der Zusatzhandgriff (10) einen vorzugsweise durch Schaumspritzgiessen erhaltenen Schaumkern (1) aufweist.

2. Zusatzhandgriff (10) nach Anspruch 1,
**dadurch gekennzeichnet, dass** der Schaumkern (1) zumindest abschnittsweise durch eine Stützschale (2) umschlossen ist.

3. Zusatzhandgriff (10) nach Anspruch 2,
**dadurch gekennzeichnet, dass** die Stützschale (2) zumindest abschnittsweise durch eine Weichkomponentenschicht (3) umschlossen ist.

4. Zusatzhandgriff (10) nach Anspruch 2 oder 3,
**dadurch gekennzeichnet, dass** der Schaumkern (1) als Einleger (1') bereitgestellt ist und die Stützschale (2) durch Umspritzen des Einlegers (1') erhalten wurde.

5. Zusatzhandgriff (10) nach Anspruch 3 oder 4,
**dadurch gekennzeichnet, dass** die Stützschale (2) und die Weichkomponentenschicht (3) durch einen 2K-Spritzguss erhalten wurden.

6. Zusatzhandgriff (10) nach einem der Ansprüche 2 bis 5,
**dadurch gekennzeichnet, dass** der Schaumkern (1) und die Stützschale (2) dasselbe Material aufweisen oder aus demselben Material bestehen, insbesondere aus einem glasfaserverstärkten Polyamid.

7. Zusatzhandgriff (10) nach einem der Ansprüche 3 bis 6,
**dadurch gekennzeichnet, dass** die Weichkomponentenschicht (3) aus einem thermoplastischen Elastomer besteht oder ein solches aufweist.

8. Zusatzhandgriff (10) nach einem der vorangehenden Ansprüche,
**dadurch gekennzeichnet, dass** der Schaumkern (1) durch physikalisches oder chemisches Aufschäumen erhalten wurde.

9. Zusatzhandgriff (10) nach einem der vorangehenden Ansprüche,
**dadurch gekennzeichnet, dass** der Schaumkern (1) einen Schäumgrad größer 30 Prozent und/oder einen Schäumgrad kleiner 60 Prozent aufweist.

10. Zusatzhandgriff (10) nach einem der vorangehenden Ansprüche,
**dadurch gekennzeichnet, dass** der Schaumkern (1) wenigstens 50 Prozent, vorzugsweise wenigstens 75 Prozent eines Gesamtvolumens des Zusatzhandgriffs (10) ausmacht.

11. Handwerkzeugmaschine (100) mit einem Zusatzhandgriff (10) nach einem der vorangehenden Ansprüche.

12. Verfahren zum Herstellen eines Zusatzhandgriffs für eine Handwerkzeugmaschine mit den Schritten:
- (S1) Bereitstellen eines Schaumkerns,
- (S2) Bereitstellen einer Stützschale, die den Schaumkern zumindest abschnittsweise umgibt.

13. Verfahren nach Anspruch 12 mit dem Schritt:
- (S3) zumindest abschnittsweises Umschließen der Stützschale mit einer Weichkomponentenschicht, vorzugsweise mittels Umspritzen.

14. Verfahren nach Anspruch 13, wobei der Schaumkern als Einleger bereitgestellt wird und der Schritt (S2) des Bereitstellens der Stützschale nach dem Schritt (S1) des Bereitstellens des Schaumkerns erfolgt, wobei die Stützschale durch Umspritzen des Einlegers erhalten wird.

15. Verfahren nach Anspruch 13 oder 14, wobei der Schritt (S2) des Bereitstellens des Stützschale und der Schritt (S3) des Bereitstellens der Weichkomponentenschicht mittels eines 2K-Spritzgussverfahrens erfolgt.
